# EUROPEAN PATENT SPECIFICATION

(11) **EP 4 233 422 B1**
(45) Date of publication and mention of the grant of the patent: **06.08.2025**
(21) Application number: 21801638.4
(22) Date of filing: 22.10.2021
(51) Int. Cl.: H04W 72/02, H04W 4/70, H04W 88/04

(54) **LOGICAL CHANNEL PRIORITIZATION**
LOGISCHE KANALPRIORISIERUNG
PRIORISATION DE CANAL LOGIQUE

(30) Priority: 22.10.2020 WO PCT/CN2020/122710
(43) Date of publication of application: 30.08.2023
(73) Proprietor: Telefonaktiebolaget LM Ericsson (publ), 164 83 Stockholm (SE)
(72) Inventor: ZHANG, Zhang, Beijing 100102 (CN); WANG, Min, 977 53 Luleå (SE)
(74) Representative: Ericsson
(86) International application number: PCT/IB2021/059773
(87) International publication number: WO 2022/084948

(56) References cited:
- WO-A1-2019/198838
- US-A1- 2018 069 618

## Description

### FIELD

The present disclosure relates to wireless communications, and in particular, to logical channel prioritization using, for example, a wireless device (WD) to network relay.

### BACKGROUND

The Third Generation Partnership Project (3GPP) has developed and is developing standards for Fourth Generation (4G) (also referred to as Long Term Evolution (LTE)) and Fifth Generation (5G) (also referred to as New Radio (NR)) wireless communication systems. Such systems provide, among other features, broadband communication between network nodes, such as base stations, and mobile wireless devices (WD), as well as communication between network nodes and between WDs 22.

The 3GPP has specified standards for LTE D2D (device-to-device) technology, also known as ProSe (Proximity Services) in 3GPP Technical Release 12 and Technical Release 13 of LTE. Later in 3GPP Technical Releases 14 and 15, LTE vehicle to anything (V2X) related enhancements targeting the specific characteristics of vehicular communications were specified. The 3GPP started a new work item (WI) in August 2018 within the scope of 3GPP Technical Release 16 to develop a new radio (NR) version of V2X communications. The NR V2X standard mainly targets advanced V2X services, which can be categorized into four use case groups: vehicles platooning, extended sensors, advanced driving and remote driving. The advanced V2X services may require an enhanced NR system and a new NR sidelink framework to meet stringent latency and reliability requirements. The NR V2X system also expects to have higher system capacity and better coverage and to allow for an easy extension to support the future development of further advanced V2X services and other services.

Given the targeted services by NR V2X, it is commonly recognized that groupcast/ multicast and unicast transmissions are desired, in which the intended receiver of a message consists of only a subset of the vehicles in proximity to the transmitter (groupcast) or of a single vehicle (unicast). For example, in the platooning service there are certain messages that are only of interest to the members of the platoon, making the members of the platoon a natural groupcast. In another example, the see-through use case most likely involves only a pair of vehicles, for which unicast transmissions naturally fit. Therefore, NR sidelink can support broadcast (as in LTE), groupcast and unicast transmissions. Furthermore, NR sidelink is designed in such a way that its operation is possible with and without network coverage and with varying degrees of interaction between the WDs 22 (user equipment) and the NW (network), including support for standalone, network-less operation.

In 3GPP Technical Release 17, place and national security and public safety (NSPS) are considered to be one important use case that can benefit from the already developed NR sidelink features in 3GPP Technical Release 16. Therefore, it is most likely that the 3GPP will specify enhancements related to the NSPS use case taking NR 3GPP Technical Release 16 sidelink as a baseline. Besides, in some scenarios, NSPS services need to operate with partial network coverage or without network coverage, such as indoor firefighting, forest firefighting, earthquake rescue, sea rescue, etc., where the infrastructure is partially destroyed or not available. Therefore, coverage extension is an enabler for NSPS, for both NSPS services communicated between WD and cellular network (NW) and communicated between WDs 22 over sidelink. In 3GPP Technical Release 17, a new system identification (SID) on NR sidelink relay is used to further explore coverage extension for sidelink-based communication, including both WD to NW relay for cellular coverage extension, and WD to WD relay for sidelink coverage extension

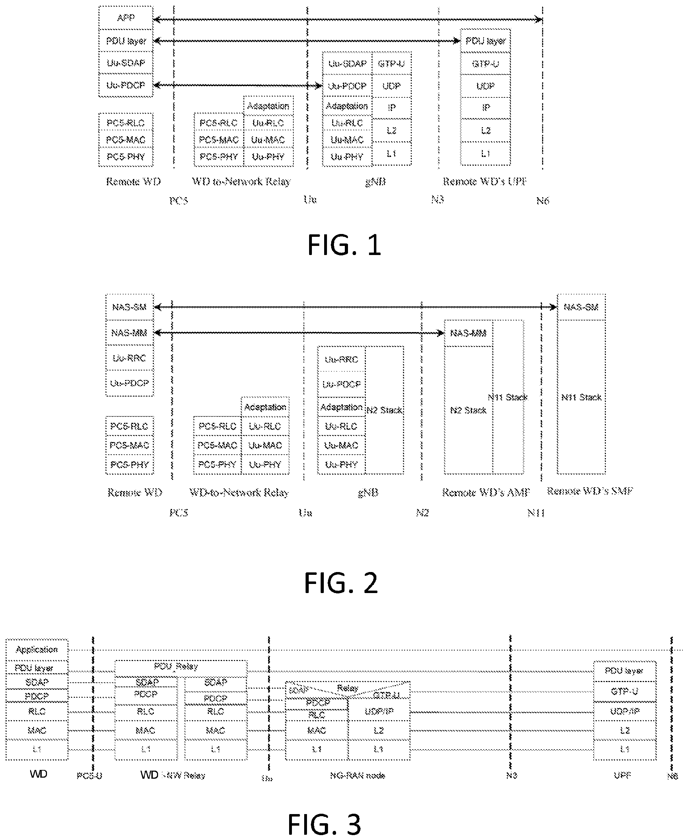

The Open System Interconnection Model Layer 2 (L2) WD to network (NW) relay WD provides the functionality to support connectivity to the 5G for remote WDs 22. The protocol stack for L2 WD to NW relay WD is shown in FIG. 1 and FIG. 2 for user plane and control plane, respectively. Note that the two endpoints of the packet data convergence protocol (PDCP) link are the remote WD and the network node, e.g., base station (gNB). This means the remote WD has its own context in radio access networks (RAN) and core NW. In other words, the remote WD has its own radio bearer, radio resource control (RRC) connection and packet data unit (PDU) session. The relay function is performed below PDCP, e.g., at the adaptation layer. The remote WD's traffic (both control plane and user plane) is transparently transferred between the remote WD and network node over the L2 WD to NW relay WD without any modifications.

The adaptation layer between the L2 WD to NW relay WD and the network node is able to differentiate between Uu bearers of a particular remote WD. Different remote WDs and different Uu bearers of the remote WD are indicated by additional information (e.g., WD IDs and bearer IDs) included in an adaptation layer header that is added to PDCP PDU. The adaptation layer can be considered as part of PDCP sublayer or a separate new layer between PDCP sublayer and radio link control (RLC) sublayer.

When both the remote WD and the L2 WD to NW relay WD are in RRC idle/inactive mode and there is incoming downlink (DL) traffic for the remote WD, the network node, will first page the remote WD. The L2 WD to NW relay WD monitors the paging and informs the remote WD that there is DL traffic for the remote WD. Then both the remote WD and the L2 WD to NW relay WD establish or resume the RRC connection to the network node and the remote WD's traffic is transparently transferred between the remote WD and network node over the L2 WD to NW relay WD.

The OSI Layer 3 (L3) WD to NW relay WD relays unicast traffic (uplink (UL) and downlink (DL)) between the remote WD and the network. The L3 WD to NW relay WD provides generic functions that can relay any Internet protocol (IP), Ethernet or Unstructured traffic. The protocol stack for L3 WD to NW relay WD is shown in FIG. 3 below where relaying is performed in the PDU layer. The remote WD is invisible to the core NW, i.e., the remote WD does not have its own context and PDU session in the core NW, and its traffic is forwarded in relay WD's PDU session. For Internet Protocol (IP) PDU Session Type and IP traffic over the PC5 reference point, the L3 WD to NW relay WD allocates IPv6 prefix or IPv4 address for the remote WD.

In cases where the L3 WD to NW relay WD is in RRC idle/inactive mode and there is incoming DL traffic for the remote WD, the network node will first page the L3 WD to NW relay WD, which trigger the L3 WD to NW relay WD to establish or resume the RRC connection, and then the NW sends the remote WD's traffic to the L3 WD to NW relay WD which further forwards it to the remote WD.

There are two different resource allocation (RA) procedures for V2X on sidelink, i.e., NW controlled random access (RA) (so called "mode 3" in LTE and "mode 1" in NR) and autonomous RA (so called "mode 4" in LTE and "mode 2" in NR). The transmission resources are selected within a resource pool which is predefined or configured by the network (NW).

With NW controlled random access (RA), the sidelink radio resource for data transmission is scheduled/allocated by the NW. The WD sends a sidelink buffer status report (BSR) to the NW to inform sidelink data available for transmission in the sidelink buffers associated with the MAC entity, and the NW signals the resource allocation to the WD using DCI. With autonomous RA, each device independently decides which radio resources to use for each transmission based at least in part on e.g., sensing.

When performing sensing, the WD decodes the sidelink control information (SCI) transmitted on the physical sidelink control channel (PSCCH) from the surrounding WDs. The WD can know the resources on which the physical sidelink shared channel (PSSCH) is transmitted by these surrounding WDs, and can also know the highest priority of the sidelink LCH(s) in the media access control (MAC) PDU transmitted over PSSCH, which is indicated in the priority field in SCI from the surrounding WDs. The WD also measures a PSSCH reference signal received power (RSRP) and compares it to a threshold. The resource is regarded as unoccupied and available for transmission if the measured PSSCH RSRP of the resource is lower than the threshold. The threshold is set taking the priority of both the sensing WD and the sensed WD(s) into account, in a way that the threshold is set higher if the sensing WD has a higher priority than the sensed WD(s). The resource is more likely regarded unoccupied and available for the sensing WD's transmission.

Sidelink control information (SCI) is carried in the physical sidelink control channel (PSCCH) and is used to enable decoding of the associated data transmission carried in physical sidelink shared channel (PSSCH). The content of the SCI includes the allocated resources, the modulation and coding scheme (MCS), hybrid automatic repeat request (HARQ) related information (e.g., HARQ process ID, new data indicator (NDI), redundancy version (RV), etc.), the intention to reserve the same resources for a future data transmission. Moreover, for sidelink unicast and groupcast, SCI can further include layer-1 destination ID and potentially source ID as well.

A logical channel prioritization (LCP) procedure is applied when a new sidelink transmission is performed. Each sidelink logical channel (LCH) has an associated priority which is prose per packer priority (PPPP) in LTE and, optionally, an associated prose per packet reliability (PPPR). In NR, the associated priority and reliability may be derived from the quality of service (QoS) profile of the sidelink radio bearer.

When the MAC entity allocates resources to sidelink logical channels (LCHs) having data available for transmission, it should first select the Layer2 destination to which the transmission should be performed, based at least in part on the highest priority of all the sidelink LCHs belonging to each L2 destination. Only LCHs with available data are considered, and the L2 destination having the highest priority is selected. After this, sidelink LCHs belonging to the selected L2 destination are served in decreasing order of priority until either the data for the sidelink logical channel(s) or the sidelink grant is exhausted, whichever comes first.

If there are simultaneous UL and sidelink transmissions, prioritization between the UL and sidelink transmission is needed. In LTE, if the UL transmission is not for Msg3 or not prioritized by an upper layer, the sidelink transmission is prioritized if the value of the highest priority of the sidelink LCH(s) in the MAC PDU is lower than thresSL-TxPrioritization (a lower priority value corresponding to a higher priority), where thresSL-TxPrioritization is configured by the NW. In 3GPP NR Technical Release 16, it was considered that the prioritization will consider both UL and sidelink QoS requirements. A separate LCH priority threshold is configured for both UL and SL transmission. The sidelink (SL) transmission is prioritized if the highest priority value of UL LCH(s) with available data is larger than the UL priority threshold and the highest priority value of SL LCH(s) with available data is lower than the SL priority threshold (here a smaller priority value corresponds to a higher priority). Otherwise the UL transmission is prioritized.

If there are simultaneous sidelink transmissions on different frequencies and/or radio access technologies (RATs), and the total sidelink (transmit) Tx power exceeds the maximum allowed Tx power, the WD should decrease the Tx power of the sidelink transmission with the lowest priority, or even drop the transmission. If needed, the procedure is repeated over the non-dropped transmissions, until the maximum allowed Tx power is no longer exceeded.

The logical channel prioritization (LCP) procedure is applied when a new UL transmission is performed, and a starvation avoidance mechanism is introduced to avoid all resources being given to the high priority channel(s)/service(s) so that low priority channel(s)/service(s) have no chance to be served. To implement the starvation avoidance mechanism, a variable Bj is maintained for each LCH j and initially set to zero. Bj is incremented by the product prioritisedBitRate (PBR) × T before every instance of the LCP procedure, where T is the time elapsed since Bj was last incremented If Bj is greater than the bucket size (i.e., PBR × bucketSizeDuration (BSD)), then Bj is set to the bucket size. The exact moment(s) when the WD updates Bj between LCP procedures is up to WD implementation, as long as Bj is up to date at the time when a grant is processed by LCP.

When a new transmission is performed, only LCHs with Bj > 0 are allocated resources in a decreasing priority order, and decrement Bj by the total size of MAC SDUs served to LCH j (Bj can be negative after this step). If any resource remains, all the LCHs are served in a strict decreasing priority order (regardless of the value of Bj) until either the data for that logical channel or the UL grant is exhausted, whichever comes first.

With WD to NW relay, the traffic transmitted over PC5 from the remote WD and/or the relay WD may be either traffic terminated at a WD or a relay traffic of the remote WD. The current sidelink (SL) LCP only considers the case that traffic transmitted over PC5 is traffic terminated at a WD, which may not work properly when relay traffic is relayed over PC5.

Prior art examples are: WO 2019/198838 A1 (LG ELECTRONICS INC [KR]) 17 October 2019; US 2018/069618 A1 (LOEHR JOACHIM [DE] ET AL) 8 March 2018.

### SUMMARY

The scope of the present invention is defined in the appended independent claims. Specific embodiments of the present invention are defined in the dependent claims. Some embodiments advantageously provide methods and WDs for logical channel prioritization with wireless device (WD) to network relay.

According to some aspects, the type of traffic transmitted over the sidelink shared channel (SL-SCH) in sidelink related procedures involving LCP, such as Layer2 (L2) destination selection, intra-WD prioritization between sidelink LCH(s), prioritization between uplink and sidelink transmission, and sensing are provided. Some embodiments may perform at least one of the following:
- An L2 destination is associated with two priority indices which are initially set to the lowest priority value, the first one is determined as the highest priority of all the sidelink LCHs which carry SL traffic terminated at a WD, the second one is determined as the highest priority of all the sidelink LCHs which carry relay traffic (i.e., the traffic is transmitted between a remote WD and a gNB);
- LCP for sidelink LCHs belonging to the selected L2 destination treat sidelink LCH(s) carrying relay traffic differently than those not carrying relay traffic, i.e., carrying SL traffic;
- Prioritization between UL and sidelink transmission is performed taking into account whether or not the sidelink carries relay traffic; and
- for a WD with SL resource allocation Mode 2, the WD performs sensing for relay traffic and SL traffic differently according to their respective priority index.

Some embodiments disclosed herein are applicable to both L2 WD to NW relay and L3 WD to NW relay arrangements.

According to one aspect, a WD is configured for sidelink communications with another WD. The WD includes processing circuitry configured to: associate a layer 2 destination with two priority indices that are initially set to a lowest priority value, a first priority index of the two priority indices indicating a highest priority of a first group of sidelink logical channels carrying sidelink traffic terminated at the WD, a second priority index of the two priority indices indicating a second group of sidelink logical channels which carry relay traffic, the first and second groups of sidelink logical channels including only sidelink logical channels that carry data and that belong to the layer 2 destination.

According to this aspect, in some embodiments, upon reception of a grant, a media access control (MAC) entity of the network node selects the layer 2 destination based at least in part on the two priority indices. In some embodiments, when the second priority index is lower than a relay priority threshold, the layer 2 destination is selected which has a highest priority level of a plurality of layer 2 destinations. In some embodiments, when the second priority index is not lower than a relay priority threshold, the layer 2 destination is selected which has a first priority index having a highest priority. In some embodiments, upon reception of a grant, after the layer 2 destination is selected, a sidelink logical channel is selected belonging to the selected layer 2 destination. In some embodiments, the sidelink logical channel is selected by following a decreasing order of logical channel priority. In some embodiments, the sidelink logical channel is selected by following a decreasing order of logical channel priority. In some embodiments, when there are simultaneous uplink and sidelink transmissions, uplink transmissions and sidelink transmissions are prioritized. In some embodiments, the prioritization of the uplink transmissions and the sidelink transmissions is based at least in part on a comparison of the second priority index to a relay priority threshold. In some embodiments, when the WD is configured with sidelink resource allocation mode 2, the WD is configured to perform sensing of uplink traffic and sidelink traffic differently.

According to another aspect, a method in a wireless device (WD) configured for sidelink communications with another WD, includes: associating a layer 2 destination with two priority indices that are initially set to a lowest priority value, a first priority index of the two priority indices indicating a highest priority of a first group of sidelink logical channels carrying sidelink traffic terminated at the WD, a second priority index of the two priority indices indicating a second group of sidelink logical channels which carry relay traffic, the first and second groups of sidelink logical channels including only sidelink logical channels that carry data and that belong to the layer 2 destination.

According to this aspect, in some embodiments, upon reception of a grant, a media access control (MAC) entity of the network node selects the layer 2 destination based at least in part on the two priority indices. In some embodiments, when the second priority index is lower than a relay priority threshold, the layer 2 destination is selected which has a highest priority level of a plurality of layer 2 destinations. In some embodiments, when the second priority index is not lower than a relay priority threshold, the layer 2 destination is selected which has a first priority index having a highest priority. In some embodiments, upon reception of a grant, after the layer 2 destination is selected, a sidelink logical channel is selected belonging to the selected layer 2 destination. In some embodiments, the sidelink logical channel is selected by following a decreasing order of logical channel priority. In some embodiments, the sidelink logical channel is selected by following a decreasing order of logical channel priority. In some embodiments, when there are simultaneous uplink and sidelink transmissions, uplink transmissions and sidelink transmissions are prioritized. In some embodiments, the prioritization of the uplink transmissions and the sidelink transmissions is based at least in part on a comparison of the second priority index to a relay priority threshold. In some embodiments, when the WD is configured with sidelink resource allocation mode 2, the WD is configured to perform sensing of uplink traffic and sidelink traffic differently.

According to another aspect, a first wireless device (WD) 22 is configured to communicate with at least a second WD 22 on sidelink, and to communicate with a network node on an uplink, the first WD 22 configured to carry sidelink traffic that terminates at the first WD 22 and the second WD 22, and to carry relay traffic between the first WD 22 and a network node via the second WD 22. The first WD 22 includes processing circuitry configured to: associate each of a plurality of layer 2 destinations with a first priority index indicating a first priority level of a first group of sidelink logical channels that carry the sidelink traffic, and a second priority index indicating a second priority level of a second group of sidelink logical channels which carry the relay traffic; and prioritize at least one layer 2 destination of the plurality of layer 2 destinations based at least in part on at least one of the two priority indices.

According to this aspect, in some embodiments, the first and second groups of sidelink logical channels include only sidelink logical channels that carry data and that belong to a layer 2 destination. In some embodiments, the first priority index indicates a sidelink logical channel having a highest priority of all sidelink logical channels which carry the sidelink traffic. In some embodiments, prioritizing the at least one layer 2 destination is performed by a media access control, MAC, entity of the first WD 22. In some embodiments, prioritizing the at least one layer 2 destination is performed upon reception of a grant from the network node. In some embodiments, a layer 2 destination is selected that has a highest second priority level among the layer 2 destinations. In some embodiments, when there is no layer 2 destination having a second priority level that exceeds a relay priority threshold, then a layer 2 destination is selected which has a highest first priority level among the plurality of layer 2 destinations. In some embodiments, when there are sidelink logical channels carrying relay traffic and that have a second priority level that exceeds a relay priority threshold, then at least one sidelink logical channel is selected by following a decreasing order of the priority of the logical channel. In some embodiments, when there are sidelink logical channels carrying sidelink traffic and that have a second priority level that exceeds a relay priority threshold, then at least one sidelink logical channel is selected by following a decreasing order of the priority of the logical channel. In some embodiments, when there are sidelink logical channels that have a logical channel priority that does not exceed a sidelink priority threshold and does not exceed a relay priority threshold, then selecting logical channels follows an order of decreasing logical channel priority. In some embodiments, the processing circuitry is further configured to: when uplink transmissions and sidelink transmissions overlap in time, prioritize between uplink transmissions and sidelink transmissions based at least in part on whether the sidelink transmissions carry relay traffic. In some embodiments, when uplink transmissions and sidelink transmissions overlap in time, the processing circuitry is further configured to: when there are sidelink logical channels carrying relay traffic and having logical channel priority level that exceeds a relay priority threshold, and when there are also uplink logical channels having logical channel priority level that exceeds an uplink priority threshold and when a highest priority level of the uplink logical channels is higher than a highest priority of all the sidelink logical channels carrying relay traffic: then prioritize the uplink transmissions over the sidelink transmissions; and otherwise, prioritize the sidelink transmissions over the uplink transmissions. In some embodiments, when uplink transmissions and sidelink transmissions overlap in time, the processing circuitry is further configured to: when there are sidelink logical channels carrying relay traffic and having logical channel priority level that exceeds a relay priority threshold, and when there are no uplink logical channels having a priority level that exceeds an uplink priority threshold, then: prioritize the sidelink transmissions over the uplink transmissions. In some embodiments, when uplink transmissions and sidelink transmissions overlap in time, the processing circuitry is further configured to: when there are no sidelink logical channels carrying relay traffic that also have logical channel priority level that exceeds the relay priority threshold, and when there are uplink logical channels having a priority level that exceeds an uplink priority threshold, then: prioritize the uplink transmissions over the sidelink transmissions. In some embodiments, when uplink transmissions and sidelink transmissions overlap in time, the processing circuitry is further configured to: when there are no sidelink logical channels carrying relay traffic that also have logical channel priority level that exceeds a relay priority threshold, and when there are no uplink logical channels having a priority level that exceeds an uplink priority threshold, then: when a highest priority level of all the sidelink logical channels carrying sidelink traffic is higher than a sidelink priority threshold and a highest priority level of the uplink logical channels exceeds a highest priority level of sidelink logical channels carrying relay traffic: then, prioritize the uplink transmissions over the sidelink transmissions; and otherwise, prioritize the sidelink transmissions over the uplink transmissions. In some embodiments, the second priority index further indicates a sidelink logical channel having a highest priority of all sidelink logical channels that carry the relay traffic.

According to yet another aspect, a method is provided in a first wireless device (WD) 22 configured to communicate with at least one other WD 22 on sidelink, and to communicate with a network node on an uplink, the WD 22 configured to carry sidelink traffic that terminates at the first WD 22, and to relay traffic between the first WD 22 and a network node. The method includes associating each of a plurality of layer 2 destinations with a first priority index indicating a first priority level of a first group of sidelink logical channels that carry the sidelink traffic, and a second priority index indicating a second priority level of a second group of sidelink logical channels which carry the relay traffic; and prioritizing at least one layer 2 destination of the plurality of layer 2 destinations based at least in part on at least one of the two priority indices.

According to this aspect, in some embodiments, the first and second groups of sidelink logical channels include only sidelink logical channels that carry data and that belong to a layer 2 destination. In some embodiments, the first priority index indicates a sidelink logical channel having a highest priority of all sidelink logical channels which carry the sidelink traffic. In some embodiments, prioritizing the at least one layer 2 destination is performed by a media access control, MAC, entity of the method. In some embodiments, prioritizing the at least one layer 2 destination is performed upon reception of a grant from the network node. In some embodiments, a layer 2 destination is selected that has a highest second priority level among the layer 2 destinations. In some embodiments, when there is no layer 2 destination having a second priority level that exceeds a relay priority threshold, then a layer 2 destination is selected which has a highest first priority level among the plurality of layer 2 destinations. In some embodiments, when there are sidelink logical channels carrying relay traffic and that have a second priority level that exceeds a relay priority threshold, then at least one sidelink logical channel is selected by following a decreasing order of the priority of the logical channel. In some embodiments, when there are sidelink logical channels carrying sidelink traffic and that have a second priority level that exceeds a relay priority threshold, then at least one sidelink logical channel is selected by following a decreasing order of the priority of the logical channel. In some embodiments, when there are sidelink logical channels that have a logical channel priority that does not exceed a sidelink priority threshold and does not exceed a relay priority threshold, then selecting logical channels follows an order of decreasing logical channel priority. In some embodiments, when uplink transmissions and sidelink transmissions overlap in time, prioritizing between uplink transmissions and sidelink transmissions based at least in part on whether the sidelink transmissions carry relay traffic. In some embodiments, the method also includes, when uplink transmissions and sidelink transmissions overlap in time: when there are sidelink logical channels carrying relay traffic and having logical channel priority level that exceeds a relay priority threshold, and when there are also uplink logical channels having logical channel priority level that exceeds an uplink priority threshold and when a highest priority level of the uplink logical channels is higher than a highest priority of all the sidelink logical channels carrying relay traffic: then prioritizing the uplink transmissions over the sidelink transmissions; and otherwise, prioritizing the sidelink transmissions over the uplink transmissions. In some embodiments, the method also includes, when uplink transmissions and sidelink transmissions overlap in time: when there are sidelink logical channels carrying relay traffic and having logical channel priority level that exceeds a relay priority threshold, and when there are no uplink logical channels having a priority level that exceeds an uplink priority threshold, then: prioritizing the sidelink transmissions over the uplink transmissions. In some embodiments, the method also includes, when uplink transmissions and sidelink transmissions overlap in time: when there are no sidelink logical channels carrying relay traffic that also have logical channel priority level that exceeds the relay priority threshold, and when there are uplink logical channels having a priority level that exceeds an uplink priority threshold, then: prioritizing the uplink transmissions over the sidelink transmissions. In some embodiments, the method also includes, when uplink transmissions and sidelink transmissions overlap in time: when there are no sidelink logical channels carrying relay traffic that also have logical channel priority level that exceeds a relay priority threshold, and when there are no uplink logical channels having a priority level that exceeds an uplink priority threshold, then: when a highest priority level of all the sidelink logical channels carrying sidelink traffic is higher than a sidelink priority threshold and a highest priority level of the uplink logical channels exceeds a highest priority level of sidelink logical channels carrying relay traffic: then, prioritizing the uplink transmissions over the sidelink transmissions; and otherwise, prioritizing the sidelink transmissions over the uplink transmissions. In some embodiments, the second priority index further indicates a sidelink logical channel having a highest priority of all sidelink logical channels that carry the relay traffic.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a diagram of a user plane stack for L2 WD to NW relay WD;
FIG. 2 is a diagram of a control plane for L2 WD to NW relay WD;
FIG. 3 is a diagram of a protocol stack for L2 WD to NW relay
FIG. 4 is a schematic diagram of an example network architecture illustrating a communication system connected via an intermediate network to a host computer according to the principles in the present disclosure;
FIG. 5 is a block diagram of a host computer communicating via a network node with a wireless device over an at least partially wireless connection according to some embodiments of the present disclosure;
FIG. 6 is a flowchart illustrating example methods implemented in a communication system including a host computer, a network node and a wireless device for executing a client application at a wireless device according to some embodiments of the present disclosure;
FIG. 7 is a flowchart illustrating example methods implemented in a communication system including a host computer, a network node and a wireless device for receiving user data at a wireless device according to some embodiments of the present disclosure;
FIG. 8 is a flowchart illustrating example methods implemented in a communication system including a host computer, a network node and a wireless device for receiving user data from the wireless device at a host computer according to some embodiments of the present disclosure;
FIG. 9 is a flowchart illustrating example methods implemented in a communication system including a host computer, a network node and a wireless device for receiving user data at a host computer according to some embodiments of the present disclosure;
FIG. 10 is a flowchart of an example process in a wireless device for logical channel prioritization with wireless device (WD) to network relay; and
FIG. 11 is a flowchart of another example process in a wireless device for logical channel prioritization with wireless device (WD) to network relay.

### DETAILED DESCRIPTION

Before describing in detail example embodiments, it is noted that the embodiments reside primarily in combinations of apparatus components and processing steps related to logical channel prioritization with wireless device (WD) to network relay. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments provide logical channel prioritization with wireless device (WD) to network relay. With the methods disclosed herein, the relay traffic relayed over PC5 could be prioritized properly, e.g. avoid that a high priority relay traffic relayed over PC5 is deprioritized if they are regarded as SL traffic terminated at a WD.

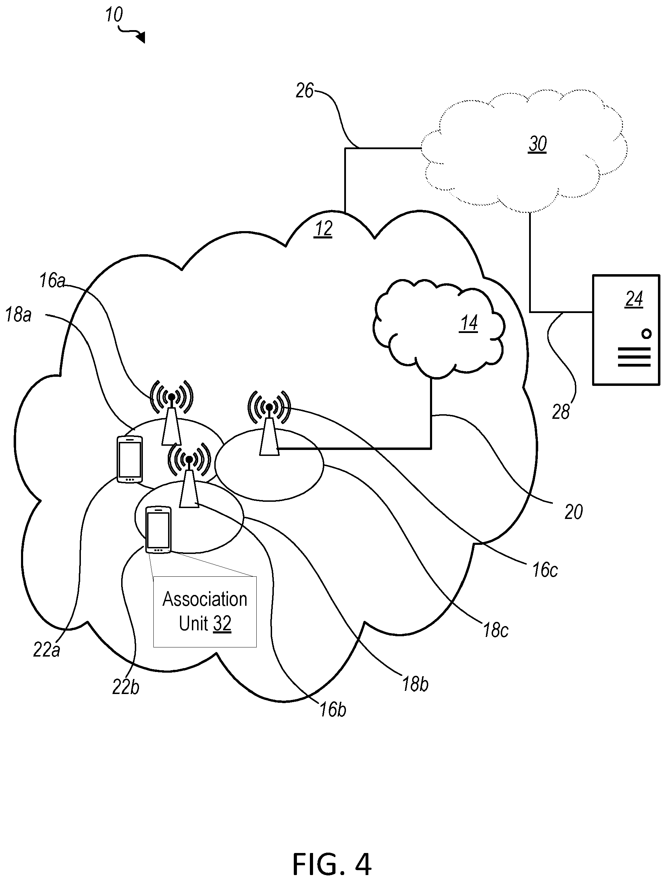

Returning now to the drawing figures, in which like elements are referred to by like reference numerals, there is shown in FIG. 4 a schematic diagram of an example communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 4 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A wireless device 22 is configured to include an association unit 34 which is configured to associate a layer 2 destination with two priority indices that are initially set to a lowest priority value.

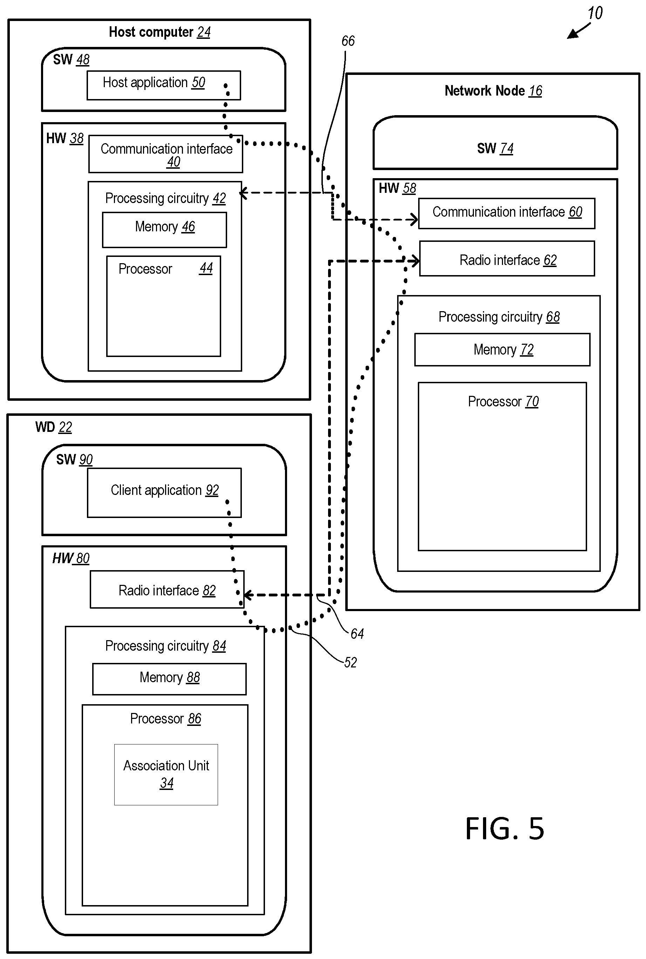

Example implementations, in accordance with an embodiment, of the WD 22, network node 16 and host computer 24 discussed in the preceding paragraphs will now be described with reference to FIG. 5. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and or the wireless device 22.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. For example, the processing circuitry 84 of the wireless device 22 may include an association unit 34 which is configured to associate a layer 2 destination with two priority indices that are initially set to a lowest priority value.

In some embodiments, the inner workings of the network node 16, WD 22, and host computer 24 may be as shown in FIG. 5 and independently, the surrounding network topology may be that of FIG. 4.

In FIG. 5, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors, etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 4 and 5 show various "units" such as association unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry.

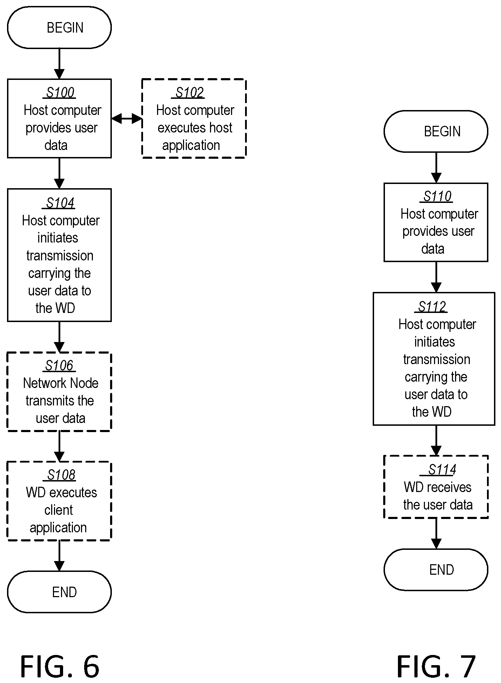

FIG. 6 is a flowchart illustrating an example method implemented in a communication system, such as, for example, the communication system of FIGS. 4 and 5, in accordance with one embodiment. The communication system may include a host computer 24, a network node 16 and a WD 22, which may be those described with reference to FIG. 5. In a first step of the method, the host computer 24 provides user data (Block S100). In an optional substep of the first step, the host computer 24 provides the user data by executing a host application, such as, for example, the host application 50 (Block S102). In a second step, the host computer 24 initiates a transmission carrying the user data to the WD 22 (Block S104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S108).

FIG. 7 is a flowchart illustrating an example method implemented in a communication system, such as, for example, the communication system of FIG. 4, in accordance with one embodiment. The communication system may include a host computer 24, a network node 16 and a WD 22, which may be those described with reference to FIGS. 4 and 5. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block S112). The transmission may pass via the network node 16, in accordance with the teachings of the embodiments described throughout this disclosure. In an optional third step, the WD 22 receives the user data carried in the transmission (Block S114).

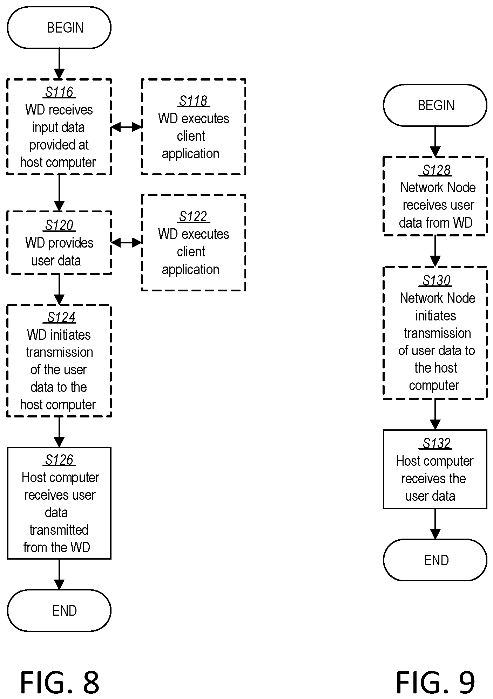

FIG. 8 is a flowchart illustrating an example method implemented in a communication system, such as, for example, the communication system of FIG. 4, in accordance with one embodiment. The communication system may include a host computer 24, a network node 16 and a WD 22, which may be those described with reference to FIGS. 4 and 5. In an optional first step of the method, the WD 22 receives input data provided by the host computer 24 (Block S116). In an optional substep of the first step, the WD 22 executes the client application 92, which provides the user data in reaction to the received input data provided by the host computer 24 (Block S118). Additionally or alternatively, in an optional second step, the WD 22 provides user data (Block S120). In an optional substep of the second step, the WD provides the user data by executing a client application, such as, for example, client application 92 (Block S122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 9 is a flowchart illustrating an example method implemented in a communication system, such as, for example, the communication system of FIG. 4, in accordance with one embodiment. The communication system may include a host computer 24, a network node 16 and a WD 22, which may be those described with reference to FIGS. 4 and 5. In an optional first step of the method, in accordance with the teachings of the embodiments described throughout this disclosure, the network node 16 receives user data from the WD 22 (Block S128). In an optional second step, the network node 16 initiates transmission of the received user data to the host computer 24 (Block S130). In a third step, the host computer 24 receives the user data carried in the transmission initiated by the network node 16 (Block S132).

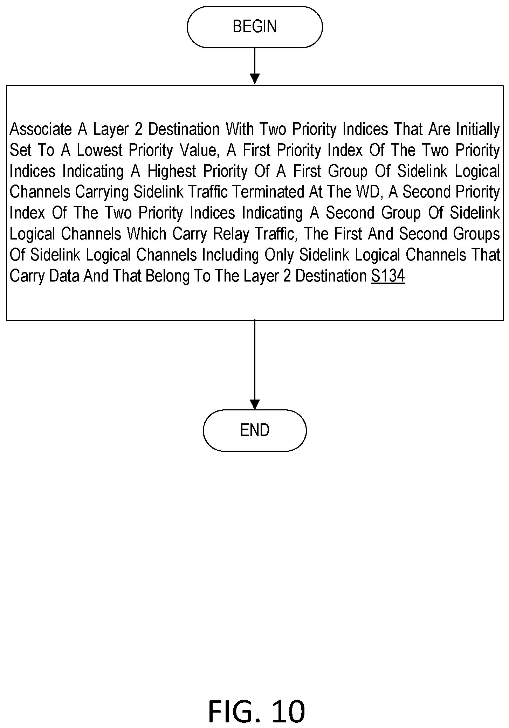

FIG. 10 is a flowchart of an example process in a wireless device 22 according to some embodiments of the present disclosure. One or more blocks described herein may be performed by one or more elements of wireless device 22 such as by one or more of processing circuitry 84 (including the association unit 34), processor 86, radio interface 82 and/or communication interface 60. Wireless device 22 such as via processing circuitry 84 and/or processor 86 and/or radio interface 82 is configured to associate a layer 2 destination with two priority indices that are initially set to a lowest priority value, a first priority index of the two priority indices indicating a highest priority of a first group of sidelink logical channels carrying sidelink traffic terminated at the WD, a second priority index of the two priority indices indicating a second group of sidelink logical channels which carry relay traffic, the first and second groups of sidelink logical channels including only sidelink logical channels that carry data and that belong to the layer 2 destination (Block S134).

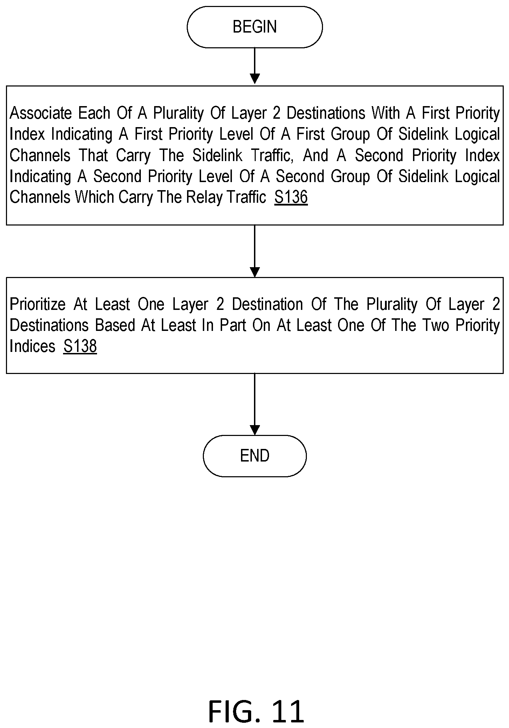

FIG. 11 is a flowchart of another example process in a WD 22 according to some embodiments of the present disclosure. One or more blocks described herein may be performed by one or more elements of wireless device 22 such as by one or more of processing circuitry 84 (including the association unit 34), processor 86, radio interface 82 and/or communication interface 60. Wireless device 22 such as via processing circuitry 84 and/or processor 86 and/or radio interface 82 is configured to associate each of a plurality of layer 2 destinations with a first priority index indicating a first priority level of a first group of sidelink logical channels that carry the sidelink traffic, and a second priority index indicating a second priority level of a second group of sidelink logical channels which carry the relay traffic (Block S136). The process also includes prioritizing at least one layer 2 destination of the plurality of layer 2 destinations based at least in part on at least one of the two priority indices (Block S138).

Having described the general process flow of arrangements of the disclosure and having provided examples of hardware and software arrangements for implementing the processes and functions of the disclosure, the sections below provide details and examples of arrangements for logical channel prioritization with wireless device (WD) to network (NW) relay.

Some embodiments are described in the context of NR sidelink communications. However, it is understood that embodiments are in general applicable to any kind of direct communications between WDs 22 involving device-to-device (D2D) communications. In the description below, a relay WD 22 may refer to a WD to NW relay WD 22. Further, although embodiments may refer to using a relay WD 22, the disclosure and implementations are not limited to such. Rather, it is understood that a general concept of the disclosure considers a first interface, e.g., sidelink interface, which may carry traffic to/from a second interface, e.g., Uu, and may do so without specifically employing a WD to NW relay WD 22.

In some embodiments, the SL from a remote WD 22 to a relay WD 22 and, from a relay WD 22 to a remote WD 22 are considered. In some embodiments, each LCH or destination is associated with at least a priority index. A low priority value means high priority level, while a high priority value means low priority level. The term "relay traffic" is used to denote traffic transmitted between a remote WD 22 and a network node 16 in a relay scenario. In addition, the term "SL local traffic" is used to stand for traffic transmitted between a remote WD 22 and a relay WD 22 in a relay scenario. In the embodiments discussed below, a WD 22 may be a remote WD 22 or a relay WD 22 unless specified.

In a first embodiment, a L2 destination is associated with two priority indices which are initially set to the lowest priority value. The first priority index is determined as the highest priority of all the sidelink LCHs which carry SL traffic terminated at a WD 22, and the second priority index is determined as the highest priority of all the sidelink LCHs which carry relay traffic (i.e., the traffic is transmitted between a remote WD 22 and a network node 16), where only LCHs with available data and belonging to the L2 destination are considered.

In some embodiments, upon reception of a grant (i.e., with SL resource allocation Mode 1 or Mode 2), the MAC entity selects the L2 destination to which the transmission should be performed considering both the first priority index and the second priority index. More specifically:
- If there is at least one Layer 2 destinations fulfilling the condition, i.e., the second priority index with the value lower than a relay priority threshold, select the L2 destination whose second priority index has highest priority level out of all these L2 destination(s). the relay priority threshold may be predefined or configured by the NW via dedicated or common control signaling (e.g., system information);
- Else, select the L2 destination whose first priority index has highest priority.

In some embodiments, upon reception of a grant (i.e., with SL resource allocation Mode 1 or Mode 2), after a L2 destination has been selected, the WD 22 further selects sidelink LCHs (with data available) belonging to the selected L2 destination in the following way.
- **Step 1:** If there are sidelink LCH(s) carrying relay traffic and having priority value lower than the relay priority threshold, the WD 22 selects sidelink LCH(s) following a decreasing order of the priority, i.e., logical channel priority;
- **Step 2:** If there are sidelink LCH(s) carrying SL traffic and having priority value lower than a sidelink priority threshold, the WD 22 selects LCH(s) following a decreasing order of the priority, i.e., logical channel priority.
- **Step 3:** If there is other sidelink LCH(s) having priority value of the first priority index higher than or equal to the sidelink priority threshold and priority value of the second priority index higher than or equal to relay priority threshold, The WD 22 selects LCHs following a decreasing order logical channels.

The procedure may stop until either the data for the sidelink LCH(s) or the sidelink grant is exhausted, whichever comes first.

In some embodiments, for a WD 22, if there are simultaneous UL and sidelink transmission overlapping in time, prioritization between UL and sidelink transmission is performed by the WD 22 taking into account whether or not the sidelink carries relay traffic. More specifically and for example:
- If there is at least one sidelink LCH(s) carrying relay traffic and having priority lower than a relay priority threshold, while there is also at least one UL LCH(s) having priority value lower than a UL threshold, prioritize UL transmission if the highest priority of all such UL LCHs is higher than the highest priority of all such SL LCHs, otherwise prioritize SL transmission.
- If there is at least one sidelink LCH(s) carrying relay traffic and having priority value lower than the relay priority threshold, while there is not any UL LCH(s) having priority value lower than the UL_threshold, prioritize SL transmission.
- If there is not any sidelink LCH(s) carrying relay traffic and having priority value lower than the relay priority threshold, while there is at least one UL LCH(s) having priority value lower than UL_threshold, prioritize UL transmission.
- If there is not any sidelink LCH(s) carrying relay traffic and having priority value lower than the relay priority threshold, while there is also not any UL LCH(s) having priority vale lower than UL_threshold, prioritize UL transmission if the highest priority of all SL LCHs carrying SL traffic (if any) is higher than the sidelink priority threshold and the highest priority of all UL LCHs is lower than the highest priority of all SL LCHs carrying relay traffic; otherwise prioritize SL transmission.
If there are no sidelink LCH(s) carrying relay traffic, then UL/SL prioritization may be performed.

In some embodiments, for a WD 22 with SL resource allocation Mode 2, the WD 22 performs sensing for relay traffic and SL traffic differently according to their respective priority index. In an example, in case the WD 22 has both SL LCHs carrying relay traffic and SL LCHs carrying SL traffic, the priority value indicated in SCI could be set to the smaller value between the priority value of highest priority of all the sidelink LCH(s) carrying relay traffic and the priority value of highest priority of all the sidelink LCH(s) carrying SL traffic. Optionally, a delta value may be added to the priority value carried in the SCI. The delta value could be predefined or configured by the NW using dedicated or common signaling. It should be set to a negative value, which means the priority used in sensing may be increased when there is relay traffic carried, so that the resource is more likely regarded as unoccupied and available for the WD's transmission.

According to one aspect, a WD 22 is configured for sidelink communications with another WD 22. The WD 22 includes processing circuitry 84 configured to: associate a layer 2 destination with two priority indices that are initially set to a lowest priority value, a first priority index of the two priority indices indicating a highest priority of a first group of sidelink logical channels carrying sidelink traffic terminated at the WD 22, a second priority index of the two priority indices indicating a second group of sidelink logical channels which carry relay traffic, the first and second groups of sidelink logical channels including only sidelink logical channels that carry data and that belong to the layer 2 destination.

According to this aspect, in some embodiments, upon reception of a grant, a media access control (MAC) entity of the WD 22 selects the layer 2 destination based at least in part on the two priority indices. In some embodiments, when the second priority index is lower than a relay priority threshold, the layer 2 destination is selected which has a highest priority level of a plurality of layer 2 destinations. In some embodiments, when the second priority index is not lower than a relay priority threshold, the layer 2 destination is selected which has a first priority index having a highest priority. In some embodiments, upon reception of a grant, after the layer 2 destination is selected, a sidelink logical channel is selected belonging to the selected layer 2 destination. In some embodiments, the sidelink logical channel is selected by following a decreasing order of logical channel priority. In some embodiments, the sidelink logical channel is selected by following a decreasing order of logical channel priority. In some embodiments, when there are simultaneous uplink and sidelink transmissions, uplink transmissions and sidelink transmissions are prioritized. In some embodiments, the prioritization of the uplink transmissions and the sidelink transmissions is based at least in part on a comparison of the second priority index to a relay priority threshold. In some embodiments, when the WD 22 is configured with sidelink resource allocation mode 2, the WD 22 is configured to perform sensing of uplink traffic and sidelink traffic differently.

According to another aspect, a method in a wireless device (WD) 22 configured for sidelink communications with another WD 22, includes: associating a layer 2 destination with two priority indices that are initially set to a lowest priority value, a first priority index of the two priority indices indicating a highest priority of a first group of sidelink logical channels carrying sidelink traffic terminated at the WD 22, a second priority index of the two priority indices indicating a second group of sidelink logical channels which carry relay traffic, the first and second groups of sidelink logical channels including only sidelink logical channels that carry data and that belong to the layer 2 destination.

According to this aspect, in some embodiments, upon reception of a grant, a media access control (MAC) entity of the WD selects the layer 2 destination based at least in part on the two priority indices. In some embodiments, when the second priority index is lower than a relay priority threshold, the layer 2 destination is selected which has a highest priority level of a plurality of layer 2 destinations. In some embodiments, when the second priority index is not lower than a relay priority threshold, the layer 2 destination is selected which has a first priority index having a highest priority. In some embodiments, upon reception of a grant, after the layer 2 destination is selected, a sidelink logical channel is selected belonging to the selected layer 2 destination. In some embodiments, the sidelink logical channel is selected by following a decreasing order of logical channel priority. In some embodiments, the sidelink logical channel is selected by following a decreasing order of logical channel priority. In some embodiments, when there are simultaneous uplink and sidelink transmissions, uplink transmissions and sidelink transmissions are prioritized. In some embodiments, the prioritization of the uplink transmissions and the sidelink transmissions is based at least in part on a comparison of the second priority index to a relay priority threshold. In some embodiments, when the WD 22 is configured with sidelink resource allocation mode 2, the WD 22 is configured to perform sensing of uplink traffic and sidelink traffic differently.

According to another aspect, a first wireless device (WD) 22 is configured to communicate with at least a second WD 22 on sidelink, and to communicate with a network node 16 on an uplink, the first WD 22 configured to carry sidelink traffic that terminates at the first WD 22 and the second WD 22, and to carry relay traffic between the first WD 22 and a network node 16 via the second WD 22. The first WD 22 includes processing circuitry 84 configured to: associate each of a plurality of layer 2 destinations with a first priority index indicating a first priority level of a first group of sidelink logical channels that carry the sidelink traffic, and a second priority index indicating a second priority level of a second group of sidelink logical channels which carry the relay traffic; and prioritize at least one layer 2 destination of the plurality of layer 2 destinations based at least in part on at least one of the two priority indices.

According to this aspect, in some embodiments, the first and second groups of sidelink logical channels include only sidelink logical channels that carry data and that belong to a layer 2 destination. In some embodiments, the first priority index indicates a sidelink logical channel having a highest priority of all sidelink logical channels which carry the sidelink traffic. In some embodiments, prioritizing the at least one layer 2 destination is performed by a media access control, MAC, entity of the first WD 22. In some embodiments, prioritizing the at least one layer 2 destination is performed upon reception of a grant from the network node 16. In some embodiments, a layer 2 destination is selected that has a highest second priority level among the layer 2 destinations. In some embodiments, when there is no layer 2 destination having a second priority level that exceeds a relay priority threshold, then a layer 2 destination is selected which has a highest first priority level among the plurality of layer 2 destinations. In some embodiments, when there are sidelink logical channels carrying relay traffic and that have a second priority level that exceeds a relay priority threshold, then at least one sidelink logical channel is selected by following a decreasing order of the priority of the logical channel. In some embodiments, when there are sidelink logical channels carrying sidelink traffic and that have a second priority level that exceeds a relay priority threshold, then at least one sidelink logical channel is selected by following a decreasing order of the priority of the logical channel. In some embodiments, when there are sidelink logical channels that have a logical channel priority that does not exceed a sidelink priority threshold and does not exceed a relay priority threshold, then selecting logical channels follows an order of decreasing logical channel priority. In some embodiments, the processing circuitry 84 is further configured to: when uplink transmissions and sidelink transmissions overlap in time, prioritize between uplink transmissions and sidelink transmissions based at least in part on whether the sidelink transmissions carry relay traffic. In some embodiments, when uplink transmissions and sidelink transmissions overlap in time, the processing circuitry 84 is further configured to: when there are sidelink logical channels carrying relay traffic and having logical channel priority level that exceeds a relay priority threshold, and when there are also uplink logical channels having logical channel priority level that exceeds an uplink priority threshold and when a highest priority level of the uplink logical channels is higher than a highest priority of all the sidelink logical channels carrying relay traffic: then prioritize the uplink transmissions over the sidelink transmissions; and otherwise, prioritize the sidelink transmissions over the uplink transmissions. In some embodiments, when uplink transmissions and sidelink transmissions overlap in time, the processing circuitry 84 is further configured to: when there are sidelink logical channels carrying relay traffic and having logical channel priority level that exceeds a relay priority threshold, and when there are no uplink logical channels having a priority level that exceeds an uplink priority threshold, then: prioritize the sidelink transmissions over the uplink transmissions. In some embodiments, when uplink transmissions and sidelink transmissions overlap in time, the processing circuitry 84 is further configured to: when there are no sidelink logical channels carrying relay traffic that also have logical channel priority level that exceeds the relay priority threshold, and when there are uplink logical channels having a priority level that exceeds an uplink priority threshold, then: prioritize the uplink transmissions over the sidelink transmissions. In some embodiments, when uplink transmissions and sidelink transmissions overlap in time, the processing circuitry 84 is further configured to: when there are no sidelink logical channels carrying relay traffic that also have logical channel priority level that exceeds a relay priority threshold, and when there are no uplink logical channels having a priority level that exceeds an uplink priority threshold, then: when a highest priority level of all the sidelink logical channels carrying sidelink traffic is higher than a sidelink priority threshold and a highest priority level of the uplink logical channels exceeds a highest priority level of sidelink logical channels carrying relay traffic: then, prioritize the uplink transmissions over the sidelink transmissions; and otherwise, prioritize the sidelink transmissions over the uplink transmissions. In some embodiments, the second priority index further indicates a sidelink logical channel having a highest priority of all sidelink logical channels that carry the relay traffic.

According to yet another aspect, a method is provided in a first wireless device, WD, (22) configured to communicate with at least one other WD 22 on sidelink, and to communicate with a network node 16 on an uplink, the WD 22 configured to carry sidelink traffic that terminates at the first WD 22, and to relay traffic between the first WD 22 and a network node 16. The method includes associating each of a plurality of layer 2 destinations with a first priority index indicating a first priority level of a first group of sidelink logical channels that carry the sidelink traffic, and a second priority index indicating a second priority level of a second group of sidelink logical channels which carry the relay traffic; and prioritizing at least one layer 2 destination of the plurality of layer 2 destinations based at least in part on at least one of the two priority indices.

According to this aspect, in some embodiments, the first and second groups of sidelink logical channels include only sidelink logical channels that carry data and that belong to a layer 2 destination. In some embodiments, the first priority index indicates a sidelink logical channel having a highest priority of all sidelink logical channels which carry the sidelink traffic. In some embodiments, prioritizing the at least one layer 2 destination is performed by a media access control, MAC, entity of the method. In some embodiments, prioritizing the at least one layer 2 destination is performed upon reception of a grant from the network node 16. In some embodiments, a layer 2 destination is selected that has a highest second priority level among the layer 2 destinations. In some embodiments, when there is no layer 2 destination having a second priority level that exceeds a relay priority threshold, then a layer 2 destination is selected which has a highest first priority level among the plurality of layer 2 destinations. In some embodiments, when there are sidelink logical channels carrying relay traffic and that have a second priority level that exceeds a relay priority threshold, then at least one sidelink logical channel is selected by following a decreasing order of the priority of the logical channel. In some embodiments, when there are sidelink logical channels carrying sidelink traffic and that have a second priority level that exceeds a relay priority threshold, then at least one sidelink logical channel is selected by following a decreasing order of the priority of the logical channel. In some embodiments, when there are sidelink logical channels that have a logical channel priority that does not exceed a sidelink priority threshold and does not exceed a relay priority threshold, then selecting logical channels follows an order of decreasing logical channel priority. In some embodiments, when uplink transmissions and sidelink transmissions overlap in time, prioritizing between uplink transmissions and sidelink transmissions based at least in part on whether the sidelink transmissions carry relay traffic. In some embodiments, the method also includes, when uplink transmissions and sidelink transmissions overlap in time: when there are sidelink logical channels carrying relay traffic and having logical channel priority level that exceeds a relay priority threshold, and when there are also uplink logical channels having logical channel priority level that exceeds an uplink priority threshold and when a highest priority level of the uplink logical channels is higher than a highest priority of all the sidelink logical channels carrying relay traffic: then prioritizing the uplink transmissions over the sidelink transmissions; and otherwise, prioritizing the sidelink transmissions over the uplink transmissions. In some embodiments, the method also includes, when uplink transmissions and sidelink transmissions overlap in time: when there are sidelink logical channels carrying relay traffic and having logical channel priority level that exceeds a relay priority threshold, and when there are no uplink logical channels having a priority level that exceeds an uplink priority threshold, then: prioritizing the sidelink transmissions over the uplink transmissions. In some embodiments, the method also includes, when uplink transmissions and sidelink transmissions overlap in time: when there are no sidelink logical channels carrying relay traffic that also have logical channel priority level that exceeds the relay priority threshold, and when there are uplink logical channels having a priority level that exceeds an uplink priority threshold, then: prioritizing the uplink transmissions over the sidelink transmissions. In some embodiments, the method also includes, when uplink transmissions and sidelink transmissions overlap in time: when there are no sidelink logical channels carrying relay traffic that also have logical channel priority level that exceeds a relay priority threshold, and when there are no uplink logical channels having a priority level that exceeds an uplink priority threshold, then: when a highest priority level of all the sidelink logical channels carrying sidelink traffic is higher than a sidelink priority threshold and a highest priority level of the uplink logical channels exceeds a highest priority level of sidelink logical channels carrying relay traffic: then, prioritizing the uplink transmissions over the sidelink transmissions; and otherwise, prioritizing the sidelink transmissions over the uplink transmissions. In some embodiments, the second priority index further indicates a sidelink logical channel having a highest priority of all sidelink logical channels that carry the relay traffic.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Python, Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, all falling within the scope of the appended claims.

Abbreviations that may be used in the preceding description include:

| | |
|---|---|
| Abbreviation | Explanation |
| 3G | Third Generation of Mobile Telecommunications Technology |
| BSM | Basic Safety Message |
| BW | Bandwidth |
| BSR | Buffer Status Report |
| CAM | Cooperative Awareness Message |
| CBR | Channel Busy Ratio |
| CSI | Channel State Information |
| DPTF | Data Packet Transmission Format |
| D2D | Device-to-Device Communication |
| DENM | Decentralized Environmental Notification Message |
| DSRC | Dedicated Short-Range Communications |
| eNB | eNodeB |
| ETSI | European Telecommunications Standards Institute |
| GNSS | Global Navigation Satellite System |
| LTE | Long-Term Evolution |
| NW | Network |
| RS | Reference Signals |
| SAE | Society of the Automotive Engineer |
| TF | Transport Format |

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A method in a first wireless device, WD, (22) configured to communicate with at least one other WD (22) on sidelink, and to communicate with a network node on an uplink, the WD (22) configured to carry sidelink traffic that terminates at the first WD (22), and to relay traffic between the first WD (22) and a network node (16), the method comprising:
associating (S136) each of a plurality of layer 2 destinations with a first priority index indicating a first priority level of a first group of sidelink logical channels that carry the sidelink traffic, and a second priority index indicating a second priority level of a second group of sidelink logical channels which carry the relay traffic;
prioritizing (S138) at least one layer 2 destination of the plurality of layer 2 destinations based at least in part on at least one of the two priority indices; and
when uplink transmissions and sidelink transmissions overlap in time, prioritizing between uplink transmissions and sidelink transmissions based at least in part on whether the sidelink transmissions carry relay traffic.

2. The method of Claim 1, wherein the first and second groups of sidelink logical channels include only sidelink logical channels that carry data and that belong to a layer 2 destination.

3. The method of Claim 1 or 2, wherein the first priority index indicates a sidelink logical channel having a highest priority of all sidelink logical channels which carry the sidelink traffic.

4. The method of any of Claims 1 to 3, wherein prioritizing the at least one layer 2 destination is performed by a media access control, MAC, entity of the method.

5. The method of Claim 4, wherein prioritizing the at least one layer 2 destination is performed upon reception of a grant from the network node (16).

6. The method of any of Claims 1 to 5, wherein a layer 2 destination is selected that has a highest second priority level among the layer 2 destinations.

7. The method of any of Claims 1 to 6, wherein:
- when there is no layer 2 destination having a second priority level that exceeds a relay priority threshold, then a layer 2 destination is selected which has a highest first priority level among the plurality of layer 2 destinations; or
- when there are sidelink logical channels carrying relay traffic and that have a second priority level that exceeds a relay priority threshold, then at least one sidelink logical channel is selected by following a decreasing order of the priority of the logical channel; or
- when there are sidelink logical channels carrying sidelink traffic and that have a second priority level that exceeds a relay priority threshold, then at least one sidelink logical channel is selected by following a decreasing order of the priority of the logical channel.

8. The method of Claim 1 to 6, wherein, when there are sidelink logical channels that have a logical channel priority that does not exceed a sidelink priority threshold and does not exceed a relay priority threshold, then selecting logical channels follows an order of decreasing logical channel priority.

9. The method of any of Claims 1 to 6, further comprising, when uplink transmissions and sidelink transmissions overlap in time:
when there are sidelink logical channels carrying relay traffic and having logical channel priority level that exceeds a relay priority threshold, and when there are also uplink logical channels having logical channel priority level that exceeds an uplink priority threshold and when a highest priority level of the uplink logical channels is higher than a highest priority of all the sidelink logical channels carrying relay traffic:
then prioritizing the uplink transmissions over the sidelink transmissions; and
otherwise, prioritizing the sidelink transmissions over the uplink transmissions.

10. The method of any of Claims 1 to 6, further comprising, when uplink transmissions and sidelink transmissions overlap in time:
when there are sidelink logical channels carrying relay traffic and having logical channel priority level that exceeds a relay priority threshold, and when there are no uplink logical channels having a priority level that exceeds an uplink priority threshold, then:
prioritizing the sidelink transmissions over the uplink transmissions.

11. The method of any of Claims 1 to 6, further comprising, when uplink transmissions and sidelink transmissions overlap in time:
when there are no sidelink logical channels carrying relay traffic that also have logical channel priority level that exceeds the relay priority threshold, and when there are uplink logical channels having a priority level that exceeds an uplink priority threshold, then:
prioritizing the uplink transmissions over the sidelink transmissions.

12. The method of any of Claims 1 to 6, further comprising, when uplink transmissions and sidelink transmissions overlap in time:
when there are no sidelink logical channels carrying relay traffic that also have logical channel priority level that exceeds a relay priority threshold, and when there are no uplink logical channels having a priority level that exceeds an uplink priority threshold, then:
when a highest priority level of all the sidelink logical channels carrying sidelink traffic is higher than a sidelink priority threshold and a highest priority level of the uplink logical channels exceeds a highest priority level of sidelink logical channels carrying relay traffic:
then, prioritizing the uplink transmissions over the sidelink transmissions; and
otherwise, prioritizing the sidelink transmissions over the uplink transmissions.

13. The method of any of Claims 1 to 12, wherein the second priority index further indicates a sidelink logical channel having a highest priority of all sidelink logical channels that carry the relay traffic.

14. A computer-readable medium (88) comprising code portions which, when executed on a processor (86) of a wireless device, WD (22), configure the processor to perform the steps of a method according to any one of claims 1 to 13.

15. A first wireless device, WD, (22) configured to communicate with at least a second WD (22) on sidelinks, and to communicate with a network node on an uplink, the first WD (22) configured to carry sidelink traffic that terminates at the first WD (22) and the second WD (22), and to carry relay traffic between the first WD (22) and a network node (16) via the second WD (22), the first WD (22) comprising processing circuitry (84) configured to perform all steps of the method according to any one of claims 1 to 13.

## Patentansprüche

1. Verfahren in einer ersten drahtlosen Vorrichtung, WD, (22), die zum Kommunizieren mit mindestens einer anderen WD (22) auf einem Sidelink und zum Kommunizieren mit einem Netzwerkknoten auf einem Uplink konfiguriert ist, wobei die WD (22) zum Übertragen von Sidelink-Verkehr, der an der ersten WD (22) abschließt, und zum Weiterleiten von Verkehr zwischen der ersten WD (22) und einem Netzwerkknoten (16) konfiguriert ist, wobei das Verfahren Folgendes umfasst:
Zuordnen (S136) jedes von einer Mehrzahl von Schicht-2-Zielen zu einem ersten Prioritätsindex, der eine erste Prioritätsstufe einer ersten Gruppe von logischen Sidelink-Kanälen angibt, die den Sidelink-Verkehr übertragen, und einem zweiten Prioritätsindex, der eine zweite Prioritätsstufe einer zweiten Gruppe von logischen Sidelink-Kanälen angibt, die den Weiterleitungsverkehr übertragen;
Priorisieren (S138) mindestens eines Schicht-2-Ziels der Mehrzahl von Schicht-2-Zielen zumindest teilweise basierend auf mindestens einem der zwei Prioritätsindizes; und,
wenn Uplink-Übertragungen und Sidelink-Übertragungen einander zeitlich überlappen, Priorisieren zwischen Uplink-Übertragungen und Sidelink-Übertragungen zumindest teilweise basierend darauf, ob die Sidelink-Übertragungen Weiterleitungsverkehr übertragen.

2. Verfahren nach Anspruch 1, wobei die erste und die zweite Gruppe von logischen Sidelink-Kanälen nur logische Sidelink-Kanäle umfassen, die Daten übertragen und die zu einem Schicht-2-Ziel gehören.

3. Verfahren nach Anspruch 1 oder 2, wobei der erste Prioritätsindex einen logischen Sidelink-Kanal mit einer höchsten Priorität aller logischen Sidelink-Kanäle angibt, die den Sidelink-Verkehr übertragen.

4. Verfahren nach einem der Ansprüche 1 bis 3, wobei das Priorisieren des mindestens einen Schicht-2-Ziels durch eine Medienzugriffssteuerungsentität, MAC-Entität, des Verfahrens durchgeführt wird.

5. Verfahren nach Anspruch 4, wobei das Priorisieren des mindestens einen Schicht-2-Ziels bei Empfang einer Freigabe von dem Netzwerkknoten (16) durchgeführt wird.

6. Verfahren nach einem der Ansprüche 1 bis 5, wobei ein Schicht-2-Ziel ausgewählt wird, das eine höchste zweite Prioritätsstufe unter den Schicht-2-Zielen aufweist.

7. Verfahren nach einem der Ansprüche 1 bis 6, wobei:
- dann, wenn es kein Schicht-2-Ziel mit einer zweiten Prioritätsstufe gibt, die eine Weiterleitungsprioritätsschwelle überschreitet, ein Schicht-2-Ziel ausgewählt wird, das eine höchste erste Prioritätsstufe unter der Mehrzahl von Schicht-2-Zielen aufweist; oder
- dann, wenn es logische Sidelink-Kanäle gibt, die Weiterleitungsverkehr übertragen und die eine zweite Prioritätsstufe aufweisen, die eine Weiterleitungsprioritätsschwelle überschreitet, mindestens ein logischer Sidelink-Kanal durch Folgen einer absteigenden Reihenfolge der Priorität des logischen Kanals ausgewählt wird; oder
- dann, wenn es logische Sidelink-Kanäle gibt, die Sidelink-Verkehr übertragen und die eine zweite Prioritätsstufe aufweisen, die eine Weiterleitungsprioritätsschwelle überschreitet, mindestens ein logischer Sidelink-Kanal durch Folgen einer absteigenden Reihenfolge der Priorität des logischen Kanals ausgewählt wird.

8. Verfahren nach einem der Ansprüche 1 bis 6, wobei dann, wenn es logische Sidelink-Kanäle gibt, die eine Priorität für logische Kanäle aufweisen, die weder eine Sidelink-Prioritätsschwelle überschreitet noch eine Weiterleitungsprioritätsschwelle überschreitet, logische Kanäle ausgewählt werden, die einer Reihenfolge absteigender Priorität der logischen Kanäle folgen.

9. Verfahren nach einem Ansprüche 1 bis 6, ferner umfassend bei zeitlicher Überlappung von Uplink-Übertragungen und Sidelink-Übertragungen:
wenn es logische Sidelink-Kanäle gibt, die Weiterleitungsverkehr übertragen und eine Prioritätsstufe für logische Kanäle aufweisen, die eine Weiterleitungsprioritätsschwelle überschreitet, und wenn es außerdem logische Uplink-Kanäle mit einer Prioritätsstufe für logische Kanäle gibt, die eine Uplink-Prioritätsschwelle überschreitet, und wenn eine höchste Prioritätsstufe der logischen Uplink-Kanäle höher als eine höchste Priorität aller logischen Sidelink-Kanäle ist, die Weiterleitungsverkehr übertragen, dann:
Priorisieren der Uplink-Übertragungen gegenüber den Sidelink-Übertragungen; und
andernfalls Priorisieren der Sidelink-Übertragungen gegenüber den Uplink-Übertragungen.

10. Verfahren nach einem Ansprüche 1 bis 6, ferner umfassend bei zeitlicher Überlappung von Uplink-Übertragungen und Sidelink-Übertragungen:
wenn es logische Sidelink-Kanäle gibt, die Weiterleitungsverkehr übertragen und die eine Prioritätsstufe für logische Kanäle aufweisen, die eine Weiterleitungsprioritätsschwelle überschreitet, und wenn es keine Uplink-Kanäle mit einer Prioritätsstufe gibt, die eine Uplink-Prioritätsschwelle überschreitet, dann:
Priorisieren der Sidelink-Übertragungen gegenüber den Uplink-Übertragungen.

11. Verfahren nach einem Ansprüche 1 bis 6, ferner umfassend bei zeitlicher Überlappung von Uplink-Übertragungen und Sidelink-Übertragungen:
wenn es keine logischen Sidelink-Kanäle gibt, die Weiterleitungsverkehr übertragen und die auch eine Prioritätsstufe für logische Kanäle aufweisen, die die Weiterleitungsprioritätsschwelle überschreitet, und wenn es logische Uplink-Kanäle gibt, die eine Prioritätsstufe aufweisen, die eine Uplink-Prioritätsschwelle überschreitet, dann:
Priorisieren der Uplink-Übertragungen gegenüber den Sidelink-Übertragungen.

12. Verfahren nach einem der Ansprüche 1 bis 6, ferner umfassend bei zeitlicher Überlappung von Uplink-Übertragungen und Sidelink-Übertragungen:
wenn es keine logischen Sidelink-Kanäle gibt, die Weiterleitungsverkehr übertragen und die auch eine Prioritätsstufe für logische Kanäle aufweisen, die die Weiterleitungsprioritätsschwelle überschreitet, und wenn es keine logischen Uplink-Kanäle gibt, die eine Prioritätsstufe aufweisen, die eine Uplink-Prioritätsschwelle überschreitet, dann:
wenn eine höchste Prioritätsstufe aller logischen Sidelink-Kanäle, die Sidelink-Verkehr übertragen, höher als eine Sidelink-Prioritätsschwelle ist und eine höchste Prioritätsstufe der logischen Uplink-Kanäle eine höchste Prioritätsstufe von logischen Sidelink-Kanälen überschreitet, die Weiterleitungsverkehr übertragen, dann:
Priorisieren der Uplink-Übertragungen gegenüber den Sidelink-Übertragungen; und
andernfalls Priorisieren der Sidelink-Übertragungen gegenüber den Uplink-Übertragungen.

13. Verfahren nach einem der Ansprüche 1 bis 12, wobei der zweite Prioritätsindex ferner einen logischen Sidelink-Kanal mit einer höchsten Priorität aller logischen Sidelink-Kanäle angibt, die den Weiterleitungsverkehr übertragen.

14. Computerlesbares Medium (88), umfassend Codeabschnitte, die bei Ausführung auf einem Prozessor (86) einer drahtlosen Vorrichtung, WD, (22) den Prozessor so konfigurieren, dass er die Schritte eines Verfahrens nach einem der Ansprüche 1 bis 13 ausführt.

15. Erste drahtlose Vorrichtung, WD, (22), die zum Kommunizieren mit mindestens einer zweiten WD (22) auf Sidelinks und zum Kommunizieren mit einem Netzwerkknoten auf einem Uplink konfiguriert ist, wobei die erste WD (22) zum Übertragen von Sidelink-Verkehr, der an der ersten WD (22) und der zweiten WD (22) abschließt, und zum Übertragen von Weiterleitungsverkehr zwischen der ersten WD (22) und einem Netzwerkknoten (16) über die zweite WD (22) konfiguriert ist, wobei die erste WD (22) Verarbeitungsschaltungsanordnung (84) umfasst, die zum Ausführen aller Schritte des Verfahrens nach einem der Ansprüche 1 bis 13 konfiguriert ist.

## Revendications

1. Procédé dans un premier dispositif sans fil, WD, (22) configuré pour communiquer avec au moins un autre WD (22) sur une liaison latérale et pour communiquer avec un nœud de réseau sur une liaison montante, le WD (22) étant configuré pour porter un trafic de liaison latérale qui se termine au niveau du premier WD (22) et pour relayer un trafic entre le premier WD (22) et un nœud de réseau (16), le procédé comprenant :
l'association (S136) de chacune d'une pluralité de destinations de couche 2 à un premier indice de priorité indiquant un premier niveau de priorité d'un premier groupe de canaux logiques de liaison latérale qui portent le trafic de liaison latérale et à un deuxième indice de priorité indiquant un deuxième niveau de priorité d'un deuxième groupe de canaux logiques de liaison latérale qui portent le trafic de relais ;
la priorisation (S138) d'au moins une destination de couche 2 parmi la pluralité de destinations de couche 2 sur la base au moins en partie d'au moins l'un des deux indices de priorité ; et
lorsque des transmissions de liaison montante et des transmissions de liaison latérale se chevauchent dans le temps, la priorisation entre des transmissions de liaison montante et des transmissions de liaison latérale sur la base au moins en partie du fait que les transmissions de liaison latérale portent ou non un trafic de relais.

2. Procédé selon la revendication 1, dans lequel les premier et deuxième groupes de canaux logiques de liaison latérale incluent uniquement des canaux logiques de liaison latérale qui portent des données et qui appartiennent à une destination de couche 2.

3. Procédé selon la revendication 1 ou 2, dans lequel le premier indice de priorité indique un canal logique de liaison latérale présentant une priorité la plus élevée de tous les canaux logiques de liaison latérale qui portent le trafic de liaison latérale.

4. Procédé selon l'une quelconque des revendications 1 à 3, dans lequel la priorisation de l'au moins une destination de couche 2 est réalisée par une entité de commande d'accès au support, MAC, du procédé.

5. Procédé selon la revendication 4, dans lequel la priorisation de l'au moins une destination de couche 2 est réalisée à la réception d'un octroi depuis le nœud de réseau (16).

6. Procédé selon l'une quelconque des revendications 1 à 5, dans lequel il est sélectionné une destination de couche 2 qui présente un deuxième niveau de priorité le plus élevé parmi les destinations de couche 2.

7. Procédé selon l'une quelconque des revendications 1 à 6, dans lequel :
- lorsqu'il n'y a pas de destination de couche 2 présentant un deuxième niveau de priorité qui dépasse un seuil de priorité de relais, alors il est sélectionné une destination de couche 2 qui présente un premier niveau de priorité le plus élevé parmi la pluralité de destinations de couche 2 ; ou
- lorsqu'il y a des canaux logiques de liaison latérale portant un trafic de relais et présentant un deuxième niveau de priorité qui dépasse un seuil de priorité de relais, alors au moins un canal logique de liaison latérale est sélectionné par ordre décroissant de priorités de canaux logiques ; ou
- lorsqu'il y a des canaux logiques de liaison latérale portant un trafic de liaison latérale et présentant un deuxième niveau de priorité qui dépasse un seuil de priorité de relais, alors au moins un canal logique de liaison latérale est sélectionné par ordre décroissant de priorités de canaux logiques.

8. Procédé selon l'une quelconque des revendications 1 à 6, dans lequel, lorsqu'il y a des canaux logiques de liaison latérale présentant une priorité de canal logique qui ne dépasse pas un seuil de priorité de liaison latérale et qui ne dépasse pas un seuil de priorité de relais, alors des canaux logiques sont sélectionnés par ordre décroissant de priorités de canaux logiques.

9. Procédé selon l'une quelconque des revendications 1 à 6, comprenant en outre, lorsque des transmissions de liaison montante et des transmissions de liaison latérale se chevauchent dans le temps :
lorsqu'il y a des canaux logiques de liaison latérale portant un trafic de relais et présentant un niveau de priorité de canal logique qui dépasse un seuil de priorité de relais, et lorsqu'il y a également des canaux logiques de liaison montante présentant un niveau de priorité de canal logique qui dépasse un seuil de priorité de liaison montante et lorsqu'un niveau de priorité le plus élevé des canaux logiques de liaison montante est plus élevé qu'une priorité la plus élevée de tous les canaux logiques de liaison latérale portant un trafic de relais :
alors la priorisation des transmissions de liaison montante par rapport aux transmissions de liaison latérale ; et
sinon la priorisation des transmissions de liaison latérale par rapport aux transmissions de liaison montante.

10. Procédé selon l'une quelconque des revendications 1 à 6, comprenant en outre, lorsque des transmissions de liaison montante et des transmissions de liaison latérale se chevauchent dans le temps :
lorsqu'il y a des canaux logiques de liaison latérale portant un trafic de relais et présentant un niveau de priorité de canal logique qui dépasse un seuil de priorité de relais, et lorsqu'il n'y a pas de canaux logiques de liaison montante présentant un niveau de priorité de canal logique qui dépasse un seuil de priorité de liaison montante, alors :
la priorisation des transmissions de liaison latérale par rapport aux transmissions de liaison montante.

11. Procédé selon l'une quelconque des revendications 1 à 6, comprenant en outre, lorsque des transmissions de liaison montante et des transmissions de liaison latérale se chevauchent dans le temps :
lorsqu'il n'y a pas de canaux logiques de liaison latérale portant un trafic de relais et présentant également un niveau de priorité de canal logique qui dépasse le seuil de priorité de relais, et lorsqu'il y a des canaux logiques de liaison montante présentant un niveau de priorité de canal logique qui dépasse un seuil de priorité de liaison montante, alors
la priorisation des transmissions de liaison montante par rapport aux transmissions de liaison latérale.

12. Procédé selon l'une quelconque des revendications 1 à 6, comprenant en outre, lorsque des transmissions de liaison montante et des transmissions de liaison latérale se chevauchent dans le temps :
lorsqu'il n'y a pas de canaux logiques de liaison latérale portant un trafic de relais et présentant également un niveau de priorité de canal logique qui dépasse un seuil de priorité de relais, et lorsqu'il n'y a pas de canaux logiques de liaison montante présentant un niveau de priorité de canal logique qui dépasse un seuil de priorité de liaison montante, alors :
lorsqu'un niveau de priorité le plus élevé de tous les canaux logiques de liaison latérale portant un trafic de liaison latérale est supérieur à un seuil de priorité de liaison latérale et un niveau de priorité le plus élevé des canaux logiques de liaison montante dépasse un niveau de priorité le plus élevé de canaux logiques de liaison latérale portant un trafic de relais :
alors la priorisation des transmissions de liaison montante par rapport aux transmissions de liaison latérale ; et
sinon la priorisation des transmissions de liaison latérale par rapport aux transmissions de liaison montante.

13. Procédé selon l'une quelconque des revendications 1 à 12, dans lequel le deuxième indice de priorité indique en outre un canal logique de liaison latérale présentant une priorité la plus élevée de tous les canaux logiques de liaison latérale portant le trafic de relais.

14. Support lisible par ordinateur (88) comprenant des parties de code qui, lorsqu'elles sont exécutées sur un processeur (86) d'un dispositif sans fil, WD (22), configurent le processeur pour réaliser les étapes d'un procédé selon l'une quelconque des revendications 1 à 13.

15. Premier dispositif sans fil, WD, (22) configuré pour communiquer avec au moins un deuxième WD (22) sur des liaisons latérales et pour communiquer avec un nœud de réseau sur une liaison montante, le premier WD (22) étant configuré pour porter un trafic de liaison latérale qui se termine au niveau du premier WD (22) et du deuxième WD (22) et pour porter un trafic de relais entre le premier WD (22) et un nœud de réseau (16) via le deuxième WD (22), le premier WD (22) comprenant une circuiterie de traitement (84) configurée pour réaliser toutes les étapes du procédé selon l'une quelconque des revendications 1 à 13.
